Europäisches Patentamt

European Patent Office

Office européen des brevets

(19)

(11) Veröffentlichungsnummer: **0 019 106**
**B1**

(12) **EUROPÄISCHE PATENTSCHRIFT**

(45) Veröffentlichungstag der Patentschrift: **08.02.84**

(21) Anmeldenummer: **80102163.5**

(22) Anmeldetag: **23.04.80**

(51) Int. Cl.³: **G 01 N 25/18,**
**G 01 K 17/06**

(54) **Gerät zur Messung des Wärmeleitvermögens eines Bauteils.**

(30) Priorität: **09.05.79 CH 4334/79**

(43) Veröffentlichungstag der Anmeldung:
**26.11.80 Patentblatt 80/24**

(45) Bekanntmachung des Hinweises auf die Patenterteilung:
**08.02.84 Patentblatt 84/6**

(84) Benannte Vertragsstaaten:
**AT DE FR GB IT NL SE**

(56) Entgegenhaltungen:
**BE - A - 828 217**
**CH - A - 228 463**
**CH - A - 442 793**
**DE - A - 2 320 359**

(73) Patentinhaber: **Birukoff, Marcel**
**10, route de la Gare**
**CH-1806 Saint-Legier Vaud (CH)**

(72) Erfinder: **Birukoff, Marcel**
**10, route de la Gare**
**CH-1806 Saint-Legier Vaud (CH)**

(74) Vertreter: **Micheli, Michel Pierre et al,**
**MICHELI & CIE 118, Rue du Rhône Case Postale**
**47**
**CH-1211 Geneve 6 (CH)**

Courier Press, Leamington Spa, England.

Gerät zur Messung des Wärmeleitvermögens eines Bauteils

Die Erfindung bezieht sich auf ein Gerät der im ersten Teil des Patentanspruchs 1 genannten Art. Ein solches Gerät ist in der CH—A—442 793 als zum Stand der Technik gehörig beschrieben.

Das Messgerät laut Erfindungsgegenstand soll dazu dienen, die Wärmeisolationswerte von Bauteilen von Räumen und Gebäuden bestimmen zu können. Diese Werte sind wichtig für die Bestimmung oder Kontrolle des Wärmebedarfs und der Heizleistung bei allen Arten von Raumheizungen. Es können auch Wärme- oder Kälte verluste bei Apparaten und Maschinen gemessen werden. Das Messobjekt kann aus einem einzigen festen Material, oder aus verschiedenen Materialien zusammengesetzt bestehen, wobei darin auch gasförmige oder flüssige Bestandteile eingeschlossen sein können.

Die erfindungsgemässe Lösung der vorstehend genannten Aufgabe ist in Anspruch 1 definiert.

Der Erfindungsgegenstand ist ein tragbares Messgerät, welches erlaubt, die durch Materialien durchfliessenden Wärmekalorien zu messen. Im Vorteil gegenüber von bis jetzt bekannten Geräten ist es einfach in der Bedienung und liefert verlässliche Messwerte in kurzer Messzeit.

Mit dem Messgerät laut Erfindungsgegenstand wird die Abkühlung oder Aufwärmung des Mediums, meist Luft, welches das Messobjekt berührt und ein bestimmtes Volumen aufweist, während einer bestimmten Zeitspanne gemessen. Der Temperaturverlust, oder die Temperaturzunahme des Mediums im Messvolumen liefert eine Grundlage für die Berechnung des Wärmestroms, der durch die Messfläche fliesst. Die Messzeit muss so kurz sein, dass die gespeicherte Wärme im angrenzenden Feld und um das Messgerät keinen wesentlichen Einfluss auf das Messergebnis hat.

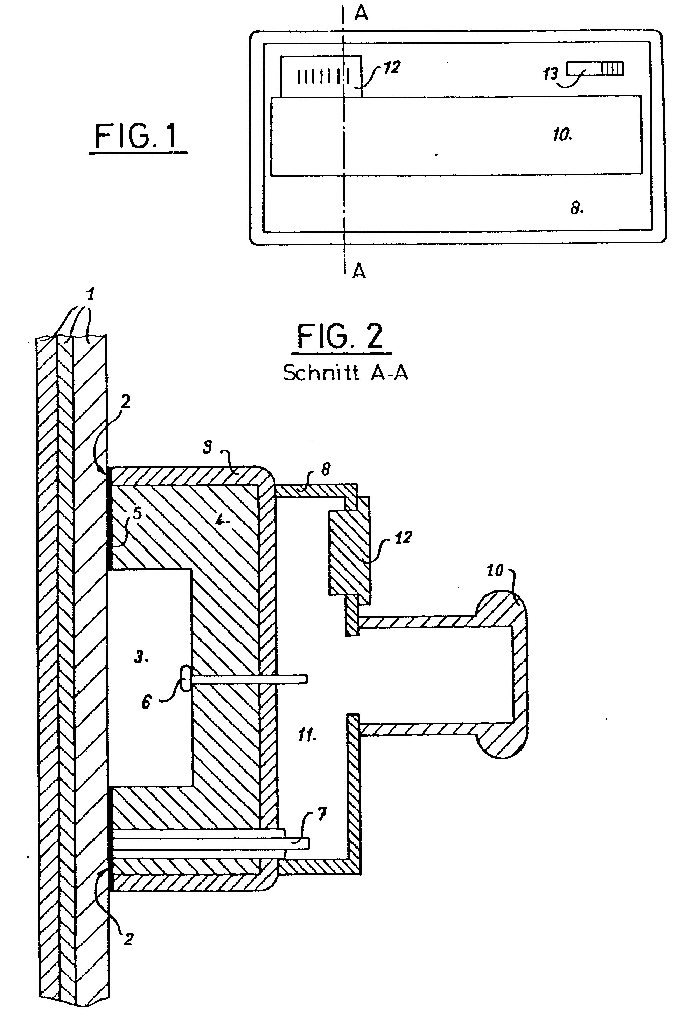

Figur 1 der Zeichnung stellt eine Ansicht von vorn des Wärmestrommessers in einer möglichen Ausführungsform dar.

Figur 2 der Zeichnung stellt eine Schnittansicht des Wärmestrommessers von Figur 1 dar, der auf einem Messobjekt aufliegt.

Dass Messgerät besteht im Wesentlichen aus der thermisch isolierten Messkammer 3, die gegen das Messobjekt 1 angedrückt wird und deren Messvolumen auf diese Weise gegen das Messobjekt 1 von der Umgebung durch eine Wärmisolierung 4 abgedichtet wird. In der Messkammer 3 befindet sich ein Fühler 6 für die Temperaturmessungen. Weiterhin besitzt das Gerät ein Gehäuse 8, 9, das die Bedienungs-, Speisungs-, Zeitbestimmungs- und Rechnerelemente und Anzeigeinstrumente enthält. Das Gerät ist mit einem handlichen Griff 10 ausgerüstet. Es kann geeicht werden.

An dem auf dem Messobjekt aufliegenden Rand 2 des Gehäuses ist eine elastische Dichtung 5 um die Oeffnung der Messkammer 3 vorgesehen. Der Raum 11 ist vorgesehen um die Elektronik des Messgerätes unterzubringen. Diese Elektronik besitzt eine Zeitmessvorrichtung, die durch eine Kontaktvorrichtung 7 für den Messbegin kontrolliert wird, und einen Rechner, der verschiedene Grössen, nämlich Temperatur, Temperatur in Abhängigkeit der Zeit, Wärmestrom oder Wärmeleitzahl aus der Temperatur- und Zeit Messungen ausrechnet und auf einem oder mehreren Anzeigeinstrumenten 12 anzeigt. Ein Hauptschalter 13 ist vorgesehen.

Das Anzeigeinstrument des Messgerätes kann eine Temperatur oder einen Temperaturunterschied, der während einer Zeitspanne gemessen wird, anzeigen, sowie den vom Rechner ermittelten Wärmestrom oder die Wärmeleitzahl des Messobjekts.

Das Messgerät kann mit zusätzliche Temperaturfühlern ausgerüstet werden, die Temperaturen ausserhalb des Messgerätes messen, welche im Anzeigeinstrument angezeigt werden, oder im Rechner berücksichtigt werden.

Die Anzeige der Messwerte des Messgerätes kann für die verschiedenen Werte in einem oder mehreren Instrumenten erfolgen.

Das Messsystem des Messgerätes kann so ausgeführt werden, dass das Messvolumen, sowie die Messfläche in den Dimensionen und Formen verändert werden können, und die Messzeit verschieden gewählt werden kann.

Das Medium in der Messkammer des Messgerätes kann für den Messzweck aufgewärmt oder abgekühlt werden, es kann gasförmig oder flüssig sein, und es kann bewegt werden.

Die Messkammer des Messgerätes kann an Stelle der Oeffnung gegen das Messobjekt eine Membrane als Abdichtunge besitzen.

Der Messvorgang beim Messgerät kann durch einen Bedienungsknopf oder Schalter, oder durch einen Aufliegeschalter bei der Berührung des Messobjektes ausgelöst werden.

Das Messgerät kann so gebaut werden, dass der Teil mit der Messkammer und der Teil mit dem Gehäuse, das die anderen Teile besitzt, miteinander beweglich verbunden sind, oder fest zusammengebaut sind.

Das Messgerät kann mit einer Vorrichtung ausgerüstet werden, die das ganze Messgerät oder den Teil mit der Messkammer, an die Messfläche des Messobjektes andrückt, gegen diese abdichtet und selbständig hält.

**Patentansprüche**

1. Gerät zur Messung des Wärmeleitvermögens eines Bauteils mit einer ein Fluid enthaltenden Messkammer (3), die in ihrer wärmeisolierenden Wandund (4) eine Oeffnung aufweist, deren Randbereich (2) so ausgebildet ist, dass die Messkammer beim Ansetzen der Oeffnung an das Bauteil (1) gegen die Umgebung abgedichtet ist, sowie mit einem in der Messkammer angeordneten Temperaturmesselement (6) zur Messung der beim Ansetzen der Oeffnung an das Bauteil durch Konvektion bedingten Abkühlung oder Erwärmung des Fluids, gekennzeichnet durch

— eine Zeitmesseinrichtung zur Festlegung eines Mess-Zeitintervalls,
— eine Recheneinrichtung zur Ermittlung des am Temperaturmesselement (6) in dem Messzeitintervall auftretenden Temperaturunterschieds,
— eine Anzeigeeinrichtung (12) für die von der Recheneinrichtung ermittelte Grösse.

2. Gerät nach Anspruch 1, dadurch gekennzeichnet, dass zusätzliche Temperaturfühler zur Erfassung der Umgebungstemperatur vorgesehen sind, dass die Recheneinrichtung zusätzlich zur Ermittlung des durch das Bauteil (1) tretenden Wärmestroms sowie der Wärmeleitzahl des Bauteils (1) ausgebildet ist, und dass die Anzeigeeinrichtung (12) zur Anzeige der gemessenen Umgebungstemperatur, des Wärmestromes sowie der Wärmeleitzahl ausgebildet ist.

3. Gerät nach Anspruch 1 oder 2, dadurch gekennzeichnet, dass das Volumen, und die Form der Messkammer (3) sowie die Dimensionen der Oeffnung veränderlich ausgeführt sind.

4. Gerät nach einem der vorhergehenden Ansprüche, dadurch gekennzeichnet, dass Einrichtungen zur Einstellung der Dauer des Messzeitintervalls vorgesehen sind.

5. Gerät nach Anspruch 1, dadurch gekennzeichnet, dass Einrichtungen zur Aufwärmung oder Abkühlung des Fluids sowie Einrichtungen zur gleichzeitigen Bewegung des Fluids vorgesehen sind.

6. Gerät nach Anspruch 1, dadurch gekennzeichnet, dass die Oeffnung mit einer Membran verschlossen ist.

7. Gerät nach Anspruch 1, dadurch gekennzeichnet, dass ein beim Ansetzen des Geräts an das Bauteil (1) betätigter Schalter (7) zur Auslösung der Temperatur- und Zeitmessung vorgesehen ist.

## Revendications

1. Appareil pour mesurer la conductibilité calorifique d'un élément comprenant une chambre de mesure (3) contenant un fluide, qui présente une ouverture dans sa paroi thermiquement isolente (4) dont le bord (2) est réalisé de telle façon que la chambre soit isolée de l'environnement lorsque l'ouverture est appliquée contre l'élément (1), ainsi qu'un élément mesurant la température (6) logé dans la chambre de mesure pour la mesure de l'échauffement ou de refroidissement du fluide par convection lorsque l'ouverture est appliquée contre l'élément caractérisée par le fait qu'elle comprend un dispositif de mesure du temps pour la détermination d'un intervalle de temps, une calculatrice pour établir la différence de température de l'élément de mesure de la température (6) pendant l'intervalle de mesure, un affichage (12) de la valeur déterminée par la calculatrice.

2. Appareil selon la revendication 1 caractérisé par le fait qu'il comporte des capteurs de température supplémentaires pour mesurer la température de l'environnement, que la calculatrice est prévue pour déterminer encore le flux de chaleur traversant l'élément (1) et sa conductibilité thermique, et que l'affichage (12) est conçu pour afficher la température de l'environnement, du flux de chaleur et du coefficient de conductibilité calorique.

3. Appareil selon la revendication 1 ou la revendication 2 caractérisé par le fait que le volume et la forme de la chambre de mesure (3) ainsi que les dimensions de l'ouverture sont variables.

4. Appareil selon l'une des revendications précédentes caractérisé par le fait qu'il comporte un dispositif pour régler la durée de l'intervalle de mesure.

5. Appareil selon la revendication 1 caractérisé par le fait qu'il comporte des dispositifs pour chauffer ou refroidir le fluide ainsi qu'un dispositif pour agiter simultanément le fluide.

6. Appareil selon la revendication 1 caractérisé par le fait que l'ouverture est formée par une membrane.

7. Appareil selon la revendication 1 caractérisé par le fait qu'il comporte un interrupteur (7) déclenchant la mesure de température lorsqu'il est appliqué contre l'élément (1).

## Claims

1. Apparatus for measuring the heat conductivity of an element comprising a measuring chamber (3) containing a fluid, which has an opening in its thermal insulating wall (4), the edge (2) of which is made in such a way that the chamber be insulated from the environment when the opening is applied against the element (1), as well as a temperature measuring element (6) housed in the measuring chamber for measuring the heating or cooling off of the fluid through convection when the opening is applied against the element, characterized by the fact that it comprises a time measuring device to determine a time interval, a calculating device to calculate the temperature difference of the temperature measuring element (6) during the measuring time interval, a display (12) of the value calculated by the calculating device.

2. Apparatus according to claim 1, characterized by the fact that it comprises further temperature feelers to measure the environmental temperature, that the calculating device is provided to define further the heat flow crossing the element (1) and its thermal conductivity, and that the display (12) is adapted to display the temperature of the environment, the heat flow and the coefficient of thermal conductivity.

3. Apparatus according to claim 1 or claim 2, characterized by the fact that the value and the shape of the measuring chamber (3) as well as the dimensions of the opening are variable.

4. Apparatus according to one of the preceding claims, characterized by the fact that it comprises a device for adjusting the measuring time interval.

5. Apparatus according to claim 1, characterized by the fact that it comprises heating or cooling devices of the fluid, as well as a device for simultaneously stirring said fluid.

6. Apparatus as claimed in claim 1, characterized by the fact that the opening is made by a membrane.

7. Apparatus as claimed in claim 1, characterized by the fact that it comprises a switch (7) starting the temperature measurement when it is applied against the element (1).

# FIG.1

# FIG. 2
## Schnitt A-A